# NOUVEAU FASCICULE DE BREVET EUROPEEN

(11) **EP 0 834 211 B2**
(45) Date de publication et mention de la décision concernant l'opposition: **12.01.2005**
(45) Mention de la délivrance du brevet: 13.01.1999
(21) Numéro de dépôt: 96924007.6
(22) Date de dépôt: 21.06.1996
(51) Int. Cl.: H02K 1/02, H02K 15/00

(54) **MACHINE ELECTRIQUE RECYCLABLE ET PROCEDE DE FABRICATION D'UNE CARCASSE D'INDUCTEUR OU D'INDUIT POUR CETTE MACHINE**
WIEDERVERWENDBARE ELEKTRISCHE MASCHINE UND VERFAHREN DER HERSTELLUNG EINES POHLJOCH ODER ANKERSKELLETS FÜR DIESE MASCHINE
RECYCLABLE ELECTRICAL MACHINE AND METHOD FOR MAKING AN INDUCTOR OR ARMATURE FRAME THEREFOR

(30) Priorité: 22.06.1995 FR 9507505
(43) Date de publication de la demande: 08.04.1998
(73) Titulaire: ECIA - EQUIPEMENTS ET COMPOSANTS POUR L'INDUSTRIE AUTOMOBILE, F-25400 Audincourt (FR)
(72) Inventeur: BARGE, Jean, F-25200 Montbéliard (FR); CHARVIEUX, Franck, F-25400 Audincourt (FR); PINTO, Danièle, F-25310 Meslières (FR); ESCARAVAGE, Gérard, F-25700 Valentigney (FR)
(74) Mandataire: Moncheny, Michel
(86) Numéro de dépôt international: PCT/FR1996/000977
(87) Numéro de publication internationale: WO 1997/001208

(56) Documents cités:
- EP-A- 0 580 208
- US-A- 4 947 065
- PATENT ABSTRACTS OF JAPAN vol. 010, no. 259 (E-434) 04 Septembre 1986 & JP,A,61 085 040 (UBE IND LTD) 30 Avril 1986
- PATENT ABSTRACTS OF JAPAN vol. 008, no. 059 (E-232) 17 Mars 1984 & JP,A,58 207 833 (TOKYO SHIBAURA DENKI KK) 03 Décembre 1983

## Description

La présente invention concerne les machines électriques.

Elle s'applique en particulier à des moteurs électriques équipant les véhicules automobiles.

Les constructeurs de véhicules automobiles sont incités pour diverses raisons à produire des véhicules recyclables.

A cet effet, les différents organes des véhicules automobiles, notamment les moteurs électriques, doivent être facilement recyclables.

Un moteur électrique comporte habituellement une carcasse d'inducteur ou d'induit portant au moins un enroulement conducteur en fil de cuivre. De façon classique, la carcasse est constituée par un empilage de tôles minces en fer doux.

Les équipements d'un véhicule sont recyclés en général en les démantelant par démontage ou par broyage et en triant les différents matériaux notamment par des moyens magnétiques.

Pour des raisons de coût, les moteurs électriques sont démantelés de préférence par broyage. Cette opération a cependant pour inconvénient de provoquer l'enchevêtrement des enroulements conducteurs dans les tôles des carcasses. De ce fait, la séparation du cuivre et du fer est difficile à réaliser ce qui limite les possibilités de recyclage de ces matériaux.

L'invention a pour but en particulier de faciliter le recyclage des machines électriques équipant notamment les véhicules automobiles.

A cet effet, l'invention a pour objets une utilisation selon la revendication 1, une machine électrique selon la revendication 11 et un moteur électrique selon la revendication 15. Des caractéristiques supplémentaires et facultatives sont mentionnées dans les revendications dépendantes 2 à 10, 12 à 14 et 16 à 18.

L'invention sera mieux comprise à la lecture de la description qui va suivre, donnée uniquement à titre d'exemple et faite en se référant aux dessins annexés dans lesquels :
- la figure 1 est une vue en coupe axiale d'un moteur électrique selon l'invention ;
- la figure 2 est une vue en perspective d'une carcasse d'induit du moteur représenté à la figure 1;
- la figure 3 montre l'état de la carcasse représentée à la figure 2 après broyage, en vue de son recyclage.

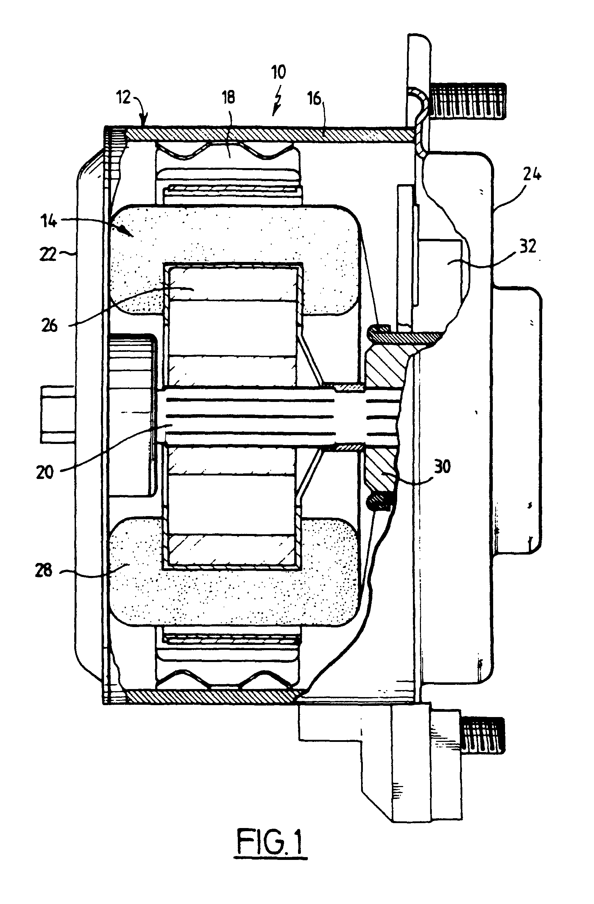

On a représenté à la figure 1 un moteur électrique 10 selon l'invention destiné à être installé par exemple dans un véhicule automobile.

De façon classique, le moteur 10 comporte un stator 12 ou inducteur et un rotor 14 ou induit.

Le stator 12 comporte un boîtier 16, formant carcasse d'inducteur, portant sur sa surface interne des aimants permanents 18.

Le rotor 14 comporte un arbre 20 monté rotatif de façon connue en soi sur deux flasques opposés 22,24 fermant les extrémités du boîtier 16.

L'arbre 20 porte une carcasse d'induit 26 sur laquelle est agencée de façon classique un enroulement rotorique en fil de cuivre.

L'enroulement 28 est relié à une source d'alimentation électrique par l'intermédiaire d'un collecteur 30 et de balais 32.

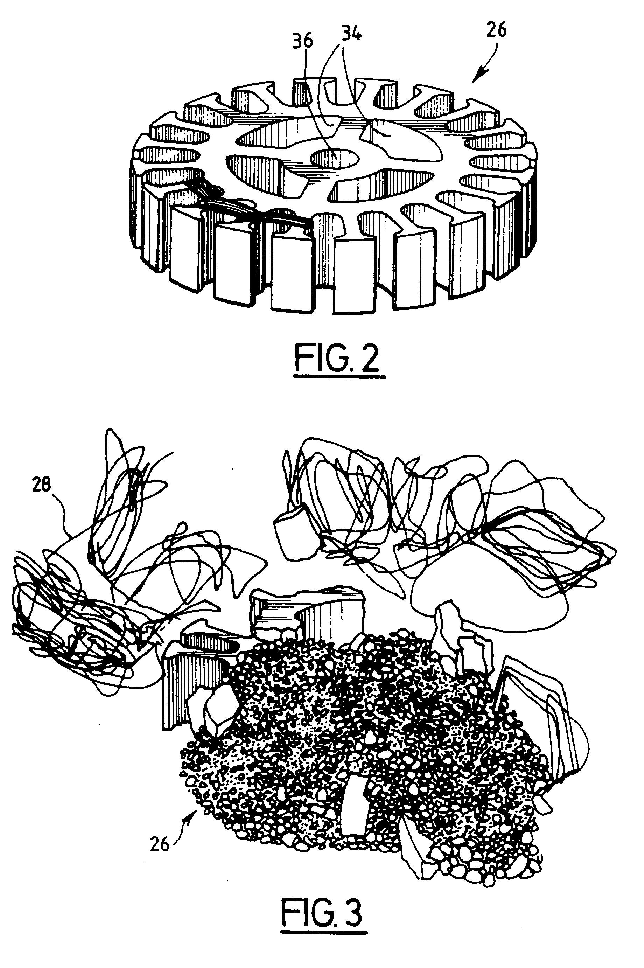

On a représenté la carcasse d'induit 26 plus en détail sur la figure 2. Pour des raisons de clarté, on a représenté sur cette figure que quelques spires de l'enroulement 28.

La carcasse d'induit 26 est fabriquée en une seule pièce massive dans un matériau broyable

Ainsi, lorsque le moteur 10 est recyclé par broyage et subit des pressions ou des chocs, la carcasse d'induit 26 est décomposée en fragments pouvant s'écouler à travers les spires en fil de cuivre de l'enroulement 28. Le cuivre de l'enroulement est alors facile à séparer du matériau de la carcasse 26, comme cela est représenté sur la figure 3.

De préférence, la carcasse d'induit 26 est fabriquée par compression dans un moule et cuisson d'un mélange de poudre de fer et de liant à base de résine organique.

Le moulage permet d'obtenir facilement une carcasse 26 de forme complexe, présentant notamment des évidements 34 allégeant la carcasse et facilitant la dissipation thermique (voir figure 2).

Selon un premier mode de réalisation de la carcasse 26, la poudre de fer et le liant présentent les caractéristiques précisées ci-dessous.

La poudre de fer a une composition granulométrique telle que 90% des particules de fer aient un diamètre compris entre 100 et 300 µm.

La poudre de fer est par exemple du type obtenu par un procédé chimique de réduction de minerai de fer. En variante, la poudre de fer peut être obtenue par un autre procédé, par exemple par un procédé physique d'atomisation à l'eau. On notera toutefois que la poudre de fer du type obtenu par réduction est relativement courante, peu coûteuse et permet une bonne liaison entre les particules et le liant.

La composition granulométrique de la poudre de fer est par exemple celle précisée dans le tableau suivant :

| µm | % |
|---|---|
| 300 | 4,6 |
| 212 | 23,7 |
| 180 | 12,7 |
| 150 | 22,2 |
| 106 | 28,4 |
| 75 | 7,2 |
| 63 | 0,8 |
| 45 | 0,4 |

Le liant se présente, avant cuisson, sous forme d'un mélange de résine époxy liquide et d'un durcisseur ayant une viscosité inférieure à 5 Pa.s, de préférence inférieure ou égale à 4 Pa.s, pour une température de 23°C.

A titre d'exemple, le liant liquide présente les propriétés précisées dans le tableau suivant :

| ***Densité*** | |
|---|---|
| résine époxy | 1,15 Kg/dm³ |
| durcisseur | 1,01 Kg/dm³ |

| ***Proportions*** | |
|---|---|
| en poids : résine époxy/durcisseur | 2/3 |
| en volume : résine époxy/durcisseur | 37/63 |

| ***Viscosité initiale à 23°C*** | |
|---|---|
| résine époxy | 12,5 Pa.s |
| durcisseur | 2,5 Pa.s |
| Mélange | 4 Pa.s |

| ***Point éclair*** | |
|---|---|
| durcisseur | 204°C |
| ***Temps de gel à 121°C*** | 21 min. |

| ***Temps de polymérisation*** | |
|---|---|
| à 75°C | 24 h |
| à 95°C | 6-8 h |
| à 120°C | 2-3 h |

Dans le cadre de ce premier mode de réalisation, la carcasse d'induit 26 selon l'exemple décrit est fabriquée selon le procédé suivant.

On prépare initialement un mélange comportant 98 à 99,5% en poids de poudre de fer et 2 à 0,5% en poids de liant.

Le mélange est réalisé par brassage mécanique en incorporant progressivement la poudre de fer dans la résine. Le mélange est maintenu à 60°C et agité pendant une heure.

Après l'opération de brassage, le mélange poudre de fer/liant est introduit dans une matrice de forme puis comprimé à l'aide d'un poinçon de forme à une pression comprise de préférence entre 600 et 1000 MPa.

La pression exercée par le poinçon est maintenu de préférence pendant environ 45 à 75 s afin de bien répartir les contraintes.

La matrice et le poinçon sont de préférence lubrifiés, avant contact avec le mélange, notamment en les revêtant de stéarate de zinc en solution dans l'acétone, par exemple par pulvérisation. Le lubrifiant externe n'étant pas incorporé dans le mélange poudre de fer/liant, on maîtrise bien la proportion de poudre de fer dans ce mélange et on obtient une pièce présentant d'excellentes propriétés mécaniques.

Après compression, la pièce est extraite de la matrice puis placée dans une étuve afin d'être cuite à une température comprise entre 75°C et 200°C, pendant 0,5 à 24 heures, de préférence à une température de 150°C pendant 0,5 heure ou bien à une température de 120°C pendant 3 heures.

Selon un second mode de réalisation de la carcasse 26, la poudre de fer présente des caractéristisques similaires au premier mode de réalisation et le liant se présente, avant cuisson, sous forme d'une poudre de résine thermoplastique ou thermodurcissable, telle qu'une résine polyamide, époxy, phénolique ou analogue.

Dans ce cas, le mélange avec la poudre de fer est réalisé à sec. Les étapes de compression du mélange et de cuisson sont similaires au premier mode de réalisation.

On notera que, dans tous les cas (premier et second modes de réalisation), le mélange poudre de fer/liant est exempt de tout lubrifiant interne. On constate en effet que, de façon inattendue, la résine organique formant le liant a des effets similaires aux lubrifiants internes, notamment aux cires, utilisés habituellement dans les étapes de compactage des procédés de frittage classiques.

On notera également que, dans tous les cas, à la différence des procédés classiques de frittage, la résine organique formant le liant n'est pas mélangée à un solvant.

Le procédé de fabrication de la carcasse d'induit selon l'invention est donc très simple à mettre en oeuvre, peu coûteux et permet d'obtenir une carcasse de masse relativement élevée (0,5 kg environ).

La carcasse d'induit obtenue selon ce procédé présente les propriétés mécaniques et magnétiques (à 100 Hz) précisées dans les deux tableaux ci-dessous. Ces propriétés sont bien entendu fonction des mélanges poudre de fer/liant.

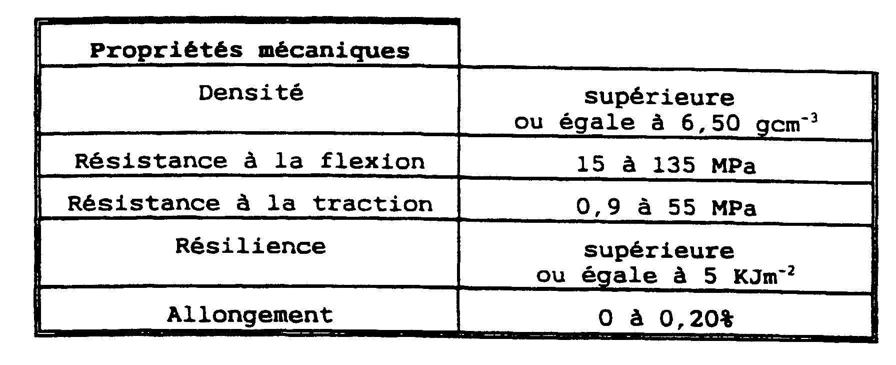

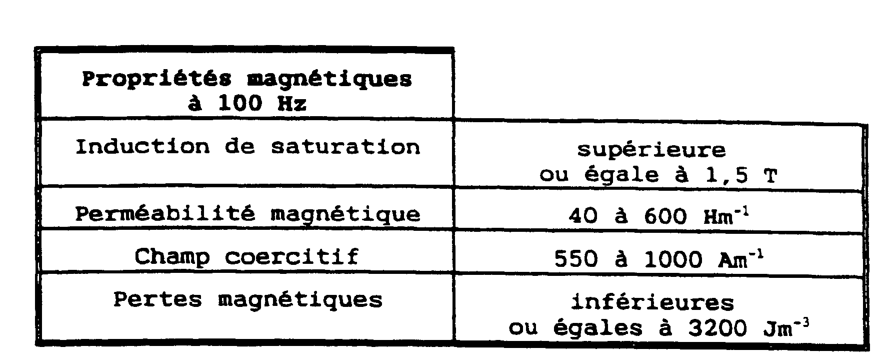

On notera donc que la carcasse d'induit selon l'invention comporte une perméabilité magnétique relativement proche de celle du fer pur et une résistance mécanique adaptée aux contraintes subies par le rotor 14, notamment lors de l'emmanchement d'un arbre cranté dans l'orifice central 36 de la carcasse.

Par rapport à une carcasse d'induit classique constituée par un empilage de tôles, la carcasse 26 selon invention présente une induction de saturation équivalente et des pertes magnétiques beaucoup plus faibles.

L'invention ne se limite pas au mode de réalisation décrit précédemment et peut s'appliquer à une carcasse d'inducteur ou d'induit d'une machine électrique quelconque fonctionnant en moteur ou en générateur.

L'invention comporte de nombreux avantages.

En particulier, elle permet de faciliter le recyclage des machines électriques équipant notamment les véhicules automobiles.

La taille relativement élevée des particules de fer, dont 90% ont un diamètre compris entre 100 et 300 µm, facilite la désagrégation de la carcasse lors de son broyage, réduit les pertes par courants de Foucault et optimise la liaison entre les particules et le liant.

Par ailleurs, la carcasse d'inducteur ou d'induit selon l'invention, comportant 98 à 99,5% en poids de poudre de fer et 2 à 0,5% en poids de liant à base de résine organique, permet d'obtenir un compromis satisfaisant entre ses propriétés magnétiques et mécaniques qui sont antagoniques.

## Revendications

1. Utilisation dans une machine électrique recyclable, pour faciliter son recyclage, d'une carcasse d'inducteur ou d'induit (26) portant un enroulement conducteur (28) et fabriquée dans un matériau broyable en fragments pouvant s'écouler à travers les spires de l'enroulement lors du recyclage.

2. Utilisation selon la revendication 1, dans laquelle la carcasse (26) est fabriquée en une seule pièce comportant 98 à 99,5% en poids de poudre de fer et 2 à 0,5% en poids de liant à base de résine organique.

3. Utilisation selon la revendication 2, dans laquelle la poudre de fer a une composition granulométrique telle que le diamètre de 90% des particules de fer soit compris entre 100 et 300 µm.

4. Utilisation selon la revendication 2 ou 3, dans laquelle la poudre de fer est du type obtenu par un procédé chimique de réduction de minerai de fer ou par un procédé physique d'atomisation.

5. Utilisation selon l'une quelconque des revendications 2 à 4, dans laquelle la carcasse (26) est fabriquée par compression et cuisson d'un mélange comportant la poudre de fer et le liant.

6. Utilisation selon la revendication 5, dans laquelle le liant se présente, avant cuisson, sous forme d'un mélange de résine époxy liquide et d'un durcisseur.

7. Utilisation selon la revendication 5 ou 6, **caractérisé en ce que** le liant se présente, avant cuisson, sous forme d'une poudre de résine thermoplastique ou thermodurcissable, telle qu'une résine polyamide, époxy, phénolique ou analogue.

8. Utilisation selon l'une quelconque des revendications 5 à 7, dans laquelle le mélange poudre de fer/liant a été introduit dans une matrice pour y être comprimé à l'aide d'un poinçon, la matrice et le poinçon ayant été lubrifiés, avant contact avec le mélange, par exemple en les revêtant de stéarate de zinc en solution dans l'acétone.

9. Utilisation selon l'une quelconque des revendications 5 à 8, dans laquelle le mélange poudre de fer/liant a été comprimé à une pression comprise entre 600 et 1000 MPa, pendant 45 à 75s.

10. Utilisation selon l'une quelconque des revendications 5 à 9, dans laquelle le mélange comprimé poudre de fer/liant a été cuit à une température comprise entre 75°C et 200°C, pendant 0,5 à 24 heures, de préférence à une température de 150°C pendant 0,5 heure ou bien à une température de 120°C pendant 3 heures.

11. Machine électrique recyclable comportant un stator (12) et un rotor (14), le rotor (14) comprenant une carcasse d'inducteur ou d'induit (26) portant un enroulement conducteur (28), **caractérisée en ce que** la carcasse (26) est fabriquée dans un matériau broyable en fragments pouvant s'écouler à travers les spires de l'enroulement lors du recyclage.

12. Machine selon la revendication 11, **caractérisée en ce que** la carcasse (26) est fabriquée en une seule pièce comportant 98 à 99,5% en poids de poudre de fer et 2 à 0,5% en poids de liant à base de résine organique.

13. Machine selon la revendication 12, **caractérisée en ce que** la poudre de fer a une composition granulométrique telle que le diamètre de 90% des particules de fer soit compris entre 100 et 300 µm.

14. Machine selon la revendication 12 ou 13, **caractérisée en ce que** la poudre de fer est du type obtenu par un procédé chimique de réduction de minerai de fer ou par un procédé physique d'atomisation.

15. Moteur électrique recyclable comportant au moins une carcasse d'inducteur ou d'induit (26) portant un enroulement conducteur (28), **caractérisé en ce que** la carcasse (26) est fabriquée dans un matériau broyable en fragments pouvant s'écouler à travers les spires de l'enroulement lors du recyclage.

16. Moteur selon la revendication 15, **caractérisé en ce que** la carcasse (26) est fabriquée en une seule pièce comportant 98 à 99,5% en poids de poudre de fer et 2 à 0,5% en poids de liant à base de résine organique.

17. Moteur selon la revendication 16, **caractérisé en ce que** la poudre de fer a une composition granulométrique telle que le diamètre de 90% des particules de fer soit compris entre 100 et 300 µm.

18. Moteur selon la revendication 16 ou 17, **caractérisé en ce que** la poudre de fer est du type obtenu par un procédé chimique de réduction de minerai de fer ou par un procédé physique d'atomisation.

## Patentansprüche

1. Verwendung einer recycelbaren elektrischen Maschine zum Vereinfachen ihrer Recycelvorgang mit einem Poljoch- oder einem Ankerskelett (26), das eine Leiterwicklung (28) trägt, und gefertigt aus einem in Bruchstücke zerbröckelbaren Material, das beim Recycelvorgang durch die Windungen hindurch abfließen kann.

2. Verwendung nach Anspruch 1, in der das Skelett (26) in einem einzigen Stück gefertigt ist, das 98 bis 99,5 Gewichts-% Eisenpulver und 2 bis 0,5 Gewichts-% Bindemittel auf der Basis von organischem Harz aufweist.

3. Verwendung nach Anspruch 2, in der das Eisenpulver eine derartige Korngrößen-Zusammensetzung hat, dass 90% der Partikel einen Durchmesser zwischen 100 und 300 µm aufweisen.

4. Verwendung nach Anspruch 2 oder 3, in der das Eisenpulver von einem Typ ist, der durch ein chemisches Reduktionsverfahren von Eisenerz oder durch ein physikalisches Zerstäubungsverfahren hergestellt wird.

5. Verwendung nach einem der Ansprüche 2 bis 4, in der das Skelett (26) mittels Pressung und Aushärten einer Mischung gefertigt ist, die das Eisenpulver und das Bindemittel aufweist.

6. Verwendung nach Anspruch 5, in der das Bindemittel vor dem Aushärten die Form einer Mischung aus flüssigem Epoxydharz und einem Härtemittel hat.

7. Verwendung nach Anspruch 5 oder 6, **dadurch gekennzeichnet, dass** das Bindemittel vor dem Aushärten die Form eines Pulvers aus thermoplastischem oder duroplastischem Harz hat, wie Polyamid-Harz, Epoxydharz, Phenol-Harz oder ähnlichem.

8. Verwendung nach einem der Ansprüche 5 bis 7, in der die Mischung aus Eisenpulver und Bindemittel in eine Matrize gegeben wird, um dort mittels eines Stempels komprimiert zu werden, wobei die Matrize und der Stempel vor dem Kontakt mit der Mischung geschmiert werden, indem sie zum Beispiel mit Zinkstearat in Acetonlösung beschichtet werden.

9. Verwendung nach einem der Ansprüche 5 bis 8, in der die Mischung aus Eisenpulver und Bindemittel bei einem Druck zwischen 600 und 1000 MPa während 45 bis 75 Sekunden komprimiert wird.

10. Verwendung nach einem der Ansprüche 5 bis 9, in der die komprimierte Mischung aus Eisenpulver und Bindemittel bei einer Temperatur von 75 bis 200°C für 0,5 bis 24 Stunden, vorzugsweise bei einer Temperatur von 150°C für 0,5 Stunden oder bei einer Temperatur von 120°C für 3 Stunden gehärtet wird.

11. Recycelbare elektrische Maschine, die einen Stator (12) und einen Rotor (14) aufweist, wobei der Rotor (14) ein Poljoch- oder Ankerskelett (26) aufweist, das eine Leiterwicklung (28) trägt, **dadurch gekennzeichnet, dass** das Skelett (26) in einem in Bruckstücke zerbröckelbaren Material gefertigt ist, das bei Recyclingvorgang durch die Windungen der Wicklung hindurch fließen kann.

12. Maschine nach Anspruch 11, **dadurch gekennzeichnet, dass** das Skelett (26) in einem Stück gefertigt ist, das 98 bis 99,5 Gewichts-% Eisenpulver und 2 bis 0,5 Gewichts-% Bindemittel auf der Basis von organischem Harz aufweist.

13. Maschine nach Anspruch 12, **dadurch gekennzeichnet, dass** das Eisenpulver eine derartige Korngrößen-Zusammensetzung hat, dass 90% der Partikel einen Durchmesser zwischen 100 und 300 µm aufweisen.

14. Maschine nach Anspruch 12 oder 13, **dadurch gekennzeichnet, dass** das Eisenpulver von einem Typ ist, der durch ein chemisches Reduktionsverfahren von Eisenerz oder durch ein physikalisches Zerstäubungsverfahren hergestellt wird.

15. Recycelbarer elektrischer Motor, der wenigstens ein Poljoch- oder Ankerskelett (26) aufweist, das eine Leiterwicklung (28) trägt, **dadurch gekennzeichnet, dass** das Skelett (26) in einem in Bruckstücke zerbröckelbaren Material gefertigt ist, das bei Recyclingvorgang durch die Windungen der Wicklung hindurch fließen kann.

16. Motor nach Anspruch 15, **dadurch gekennzeichnet, dass** das Skelett (26) in einem Stück gefertigt ist, das 98 bis 99,5 Gewichts-% Eisenpulver und 2 bis 0,5 Gewichts-% Bindemittel auf der Basis von organischem Harz aufweist.

17. Motor nach Anspruch 16, **dadurch gekennzeichnet, dass** das Eisenpulver eine derartige Korngrößen-Zusammensetzung hat, dass 90% der Partikel einen Durchmesser zwischen 100 und 300 µm aufweisen.

18. Motor nach Anspruch 16 oder 17, **dadurch gekennzeichnet, dass** das Eisenpulver von einem Typ ist, der durch ein chemisches Reduktionsverfahren von Eisenerz oder durch ein physikalisches Zerstäubungsverfahren hergestellt wird.

## Claims

1. Use in a recyclable electric machine, in order to facilitate its recycling, of an inductor or armature carcase (26) carrying a conductive winding (28) and produced from a material that can be crushed into fragments that can flow through the turns of the winding during recycling.

2. Use according to claim 1, wherein the carcase (26) is made in one piece comprising 98 to 99.5 % by weight of iron powder and 2 to 0,5 % by weight of an organic resin-based binder.

3. Use according to claim 2, wherein the iron powder has a granulometric composition such that the diameter of 90 % of the iron particles is between 100 and 300 µm.

4. Use according to claim 2 or 3, wherein the iron powder is of the type obtained by a chemical process of reducing iron ore or by a physical pulverisation process.

5. Use according to any one of claims 2 to 4, wherein the carcase (26) is made by compressing and baking a mixture comprising the iron powder and binder.

6. Use according to claim 5, wherein the binder is present, before baking, in the form of a liquid epoxy resin and a hardener.

7. Use according to claim 5 or 6, wherein the binder is present, before baking, in the form of a thermoplastic or thermosetting resin, such as a polyamide, epoxy, phenolic or similar resin.

8. Use according to any one of claims 5 to 7, wherein the iron powder/binder mixture has been introduced into a die in order to be compressed with the aid of a punch, the die and punch having been lubricated, before contact with the mixture, for example by coating them with zinc stearate dissolved in acetone.

9. Use according to any one of claims 5 to 8, wherein the iron powder/binder mixture is compressed at a pressure of between 600 and 1000 mPa for a duration of 45 to 75 s.

10. Use according to any one of claims 5 to 9, wherein the iron powder/binder mixture has been baked at a temperature of between 75°C and 200°C, for a duration of 0.5 to 24 hours, preferably at a temperature of 120°C for a duration of 3 hours.

11. Recyclable electric machine comprising a stator (12) and a rotor (14), the rotor (14) comprising an inductor or armature carcase (26) carrying a conductive winding (28), **characterized in that** the carcase (26) is produced from a material that can be crushed into fragments that can flow through the turns of the winding during recycling.

12. Machine according to claim 11, **characterized in that** the carcase (26) is made in one piece comprising 98 to 99.5 % by weight of iron powder and 2 to 0,5 % by weight of an organic resin-based binder.

13. Machine according to claim 12, **characterized in that** the iron powder has a granulometric composition such that the diameter of 90 % of the iron particles is between 100 and 300 µm.

14. Machine according to claim 12 or 13, **characterized in that** the iron powder iron powder is of the type obtained by a chemical process of reducing iron ore or by a physical pulverisation process.

15. Recyclable electric motor having at least one inductor or armature carcase (26) carrying a conductive winding (28), **characterized in that** the carcase (26) is made of a material that can be crushed into fragments that can flow through the turns of the winding during recycling.

16. Motor according to claim 15, **characterized in that** the carcase (26) is made in one piece comprising 98 to 99.5 % by weight of iron powder and 2 to 0,5 % by weight of an organic resin-based binder.

17. Motor according to claim 16, **characterized in that** the iron powder has a granulometric composition such that the diameter of 90 % of the iron particles is between 100 and 300 µm.

18. Motor according to claim 16 or 17, **characterized in that** the iron powder is of the type obtained by a chemical process of reducing iron ore or by a physical pulverisation process.
